Europäisches Patentamt

(19) European Patent Office

Office européen des brevets

(11) Publication number: **0 079 417**

**A1**

(12) **EUROPEAN PATENT APPLICATION**

(21) Application number: **81830225.9**

(22) Date of filing: **13.11.81**

(51) Int. Cl.³: **F 16 L 3/10**
**E 04 D 13/08**

(43) Date of publication of application:
**25.05.83 Bulletin 83/21**

(84) Designated Contracting States:
**BE DE FR GB IT**

(71) Applicant: **Savorani, Nevio**
**Via Decio Raggi 235**
**I-47100 Forli(IT)**

(72) Inventor: **Savorani, Nevio**
**Via Decio Raggi 235**
**I-47100 Forli(IT)**

(74) Representative: **Sassatelli, Franco**
**c/o INIP Ufficio Internazionale Brevetti per Deposito di**
**Brevetti e Marchi via Mazzini, 170**
**I-40139 Bologna(IT)**

(54) Stabilizer with collar for gutter pipes.

(57) Stabilizer with a collar consisting of half-parts (1,3) self binding by insertion of the connecting ends of projecting lengths (4) of the mobile half-part (3) in corresponding binding seats (6) of the half-part (1) fitted on the wall, the tightness being determined by the gripping effect made by this part (3) on the interposed one (1). The gradual tie is possible through parallel vertical toothings (5,7) correspondingly fitted to the two adherence wall couples of the binding components, (4,6) which act with retention on disconnection.

By changing the introduction length of said parts (4) into the tie seats (6) the collar width can be changed. The stabilizer can be made in several ways by using plastic and other materials having elasticity.

FIG.2

EP 0 079 417 A1

- 1 -

"Stabilizer with collar for gutter pipes".

The invention refers to a collar stabilizer for rain gutters consisting of self-typing parts, one of which on the wall to be assembled to the other with gripping effect on corresponding binding parts that operate on adherence walls equipped with retention means. By changing the introduction of the tying parts, the width of the collar can be graduated allowing in this way the adjustment to the gutter pipe size. The pipe fittings are foreseen in glass form, i.e. by coaxial introduction or conical clutch; the latter system causes some difficulties owing to the different sizes when introducing. Diversities may also occur as to the tolerances foreseen or to working defects.

The present stabilizers are foreseen with tie parts of correspondance and do not allow adjustments in the containment perimeter. The invention permits the solution of the problem by the use of a collar with self-binding parts, in plastic or elastic materials, by clutching on the connection ends of projecting lenghts of the mobile half-part, in corresponding tie seats of the half-part fitted on the wall, the tightness condition being performed by the gripping effect of this part on the other interposed one? The collar tie that can be graduated, is allowed by indenture parallel, vertical systems foreseen in correspondance on the two adherence wall couples which are acting as retention on disconnecting; by changing the introduction length of this part into the tie seats, they allow to change the col lar width. The condition of integrally operating collar is per mitted on the tie components by the combined effects as follows: by the outer gripping one, which the fixed part acts on the other interposed one, and by the expanding effect performed inside on the gutter pipe.

Execution versions are illustrated for information only by the drawings of Table 1; where Fig. 1 is the view from above a squa re stabilizer with inserted half-parts. Fig. 2 is the perspective view of the same stabilizer showing the disconnected tying components. Fig. 3 is a view of the stabilizer holding the rain pipe. Figures 4 and 5 represent the section of the tying device with the introduction part brought to the seat limit and in a limited shift respectively.

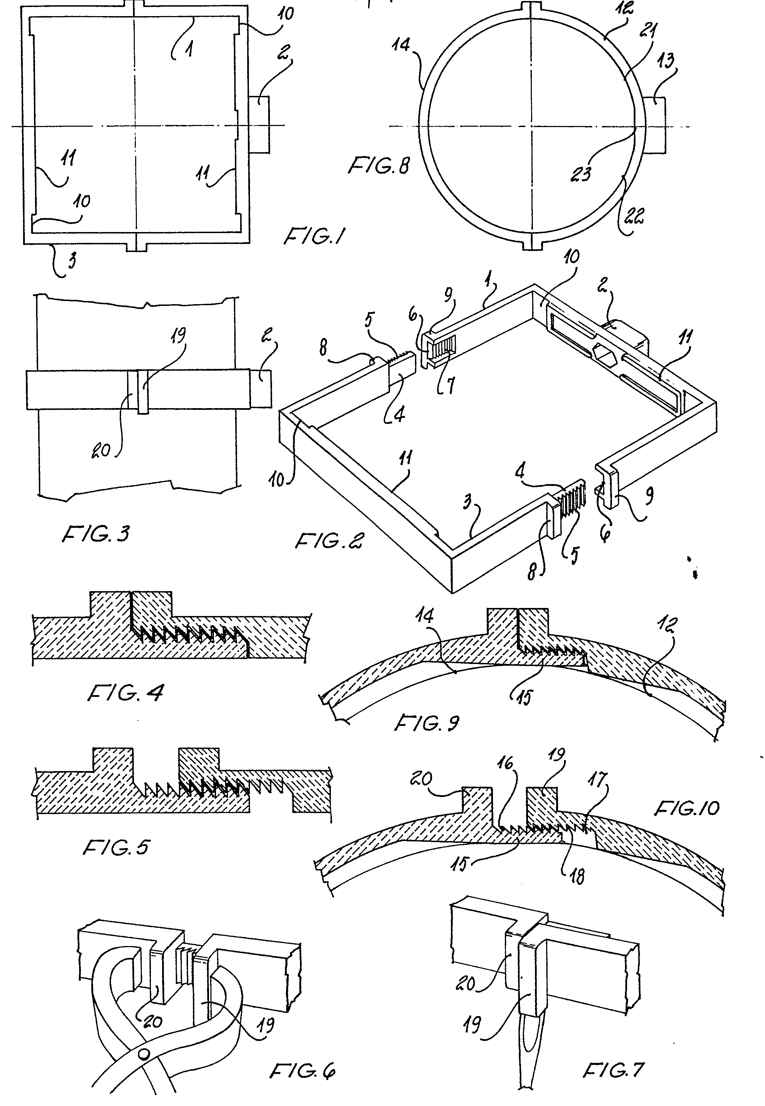

In particular, the sidewise projecting vanes can be noted which allows to act on the tying components. Fig. 6 is the outer perspective view of the junction part to show the gripping vanes which can be brought near by means of pincers. Fig. 7 shows the same part with the vanes brought to adherence and in disactivation phase by acting on the lever fitted in the lower projecting part with a conventional point. Fig. 8 is the view from above of the collar with a circular base. Figures 9 and 10 show the section of the tying device, with the introduction part brought to the seat limit and in a limited shift respectively.

In a version, the square base collar employs half-part 1 to be fixed on the wall by means of settler 2 and to be tied to the mobile half-part 3 by axial insertion, on the two jonction ends, of the lenghts 4 with toothed walls 5 into the correspond-

- 3 -

0079417

ing seats 6 with analogous toothings 7. For assembling, the two indentations are introduced into the corresponding seats and a re approched by means of pincers on the two pairs of vanes 8 a nd 9.For releasing, with a point the projecting parts of vanes 9 are raised. In order to reach an additional adjustment and p~ articularly to avoid section differences, still bringing the binding devices to a shift limit, four yielding lenghts 10 have been foreseen: on the increasing of the expanding effect performed by the rain pipe beating on the two reinforcing bases 11, lenghts 10 deform the curve on the edges, thus increasing the collar containing capacity.

In a version, the circular base collar employs fixed half-part 12 fitted on the wall by means of settler 13 to be tied on half-part 14 by axial insertion on the two connection ends of the toothed wall 16 parts 15 into the corresponding seat 17 with analogous indentations 18.For assembling, the two toothed lengths are introduced into the corresponding seats and are approached by means of pincers on the two pairs of parts 19 and 20. For releasing, the gripping part is drawn off by means of a point on the projecting side of parts 19. The additional expanding effect of the collar with circular base is allowed by the two yielding parts 21 and 22 through the increase of the pression acted by the gutter pipe on the reinforcing base 23.

The collar execution particulars, the retention systems, the settling of the tying devices, as well the employ materials may be different.

CLAIMS:

1)Stabilizer·with collar for gutter pipes,characterized by the fact that the collar is foreseen in plastic materials or however in materials having elasticity and foresees self-binding parts, in plastic or elastic materials, by clutching on the connection ends of projecting lenghts of the mobile half-part, in corresponding tie seats of the half-part fitted on the wall, the tightness condition being performed by the gripping effect of this part on the other interposed one. The collar tie that can be graduated is allowed by identure parallel, vertical systems foreseen in correspondance on the two adherence wall couples which are acting as retention on disconnecting; by changing the introduction lenght of this parts into the tie seats, they allow to change the collar width. The condition of integrally operating collar is permitted on the tie components by the combined effects as follows: by the outer gripping one, which the fixed part acts on the interposed one, and by expanding effect performed inside on the gutter pipe.

2)Stabilizer with collar for gutter pipes, according to the previous claim, characterized by the fact that in a version, the square base collar employs half-part 1 to be fixed on the wall by means of settler 2 and to be tied to the mobile half-part 3 by axial insertion, one the two jonction ends, of the lenghts 4 with toothed walls 5 into the corresponding seats 6 with analogous toothings 7. For assembling, the two indentations are introduced into the corresponding seats and are approched by means of pincers on the two pairs of vanes 8 and 9.

3)Stabilizer with collar for gutter pipes, according to the previous claims, characterized by the fact that for releasing, with a point the projecting parts of vanes 9 are raised. In order to reach an additional adjustment and particularly to avoid sec

**0079417**

tion differences, still bringing the binding devices to a shift limit, four yielding lenghts 10 have been foreseen: on the increasing of the expanding effect performed by the rain pipe beating on the two reinforcing bases 11, lenghts 10 deform the curve on the edges, thus increasing the collar containing capacity.

4)Stabilizer with collar for gutter pipes, according to the previous claims, characterized byt he fact that in a version, the circular base collar employs fixed half-part 12 fitted on the wall by means of settler 13 to be tied on half-part 14 by axial insertion on the two connection ends of the toothed wall 16 parts 15 into the corresponding seat 17 with analogous indentations 18.For assembling, the two toothed lenghts are introduced into the corresponding seats and are approached by means of pincers on the two pairs of parts 19 and 20. For releasing, the gripping part is drawn off by means of a point on the projecting side of parts 19.

5)Stabilizer with collar for gutter pipes, according to the previous claims, characterized by the fact that the additional expanding effect of the collar with circular base is allowed by the two yielding part 21 and 22 through the increase of the pression acted byt the gutter pipe on the reinforcing base 23.

0079417

FIG.1

FIG.2

FIG.3

FIG.4

FIG.5

FIG.6

FIG.7

FIG.8

FIG.9

FIG.10

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | DE-U-7 429 114 (WISAN) *Page 2, lines 20-25; page 3, lines 1-26; page 4, line 1; page 6, lines 24-25; page 7, lines 1-11,19-27; claims 1,2; figures 1,2,6* | 1 | F 16 L 3/10 E 04 D 13/08 |
| Y | FR-A-2 348 423 (HILTI) *Page 4, lines 4-32, page 5, lines 5-17, figures 1,3* & GB - A - 1 570 820 | 1,4 | |
| A | DE-A-2 505 628 (ITW) *Page 5, paragraphs 1,2,3; page 6, paragraphs 1,2,; page 7, paragraph 1; figures 1-9* | 1,2,3 | |
| A | FR-A-2 251 768 (EHB) *Page 2, lines 18-40; page 3, lines 1-8; figures 2,3* | 1,3,4 | TECHNICAL FIELDS SEARCHED (Int. Cl. ³) |
| A | DE-B-1 019 733 (FISCHER) *Column 2, lines 40-54; column 3, lines 1-13; figures 1,2,3,4,5* | 1,3,4 | F 16 L E 04 D |
| A | DE-U-7 818 091 (DEUTSCHE KAPILLAR) *Abstract* | 1,4 | |
| A | GB-A-1 076 683 (MARLEY TILE) *Page 2, column 1, lines 31-38; figures 1,2,3* | 1,5 | |

The present search report has been drawn up for all claims

| Place of search THE HAGUE | Date of completion of the search 16-07-1982 | Examiner HENDRICKX X. |
|---|---|---|